# EUROPEAN PATENT SPECIFICATION

(11) **EP 3 679 105 B1**
(45) Date of publication and mention of the grant of the patent: **14.07.2021**
(21) Application number: 18762537.1
(22) Date of filing: 07.09.2018
(51) Int. Cl.: C09J 151/06, C08L 51/06, C08L 23/20, C08K 5/43, B32B 27/32, B32B 1/00, B32B 5/02, B32B 5/08, B32B 5/26, B32B 7/12, B32B 15/04, B32B 15/082, B32B 15/085, B32B 15/088, B32B 15/09

(54) **REACTIVE POLYOLEFIN HOT-MELT ADHESIVE HAVING GOOD ADHESION ON BOTH NON-POLAR AND POLAR SUBSTRATES**
REAKTIVER POLYOLEFINSCHMELZKLEBSTOFF MIT GUTER HAFTUNG AUF SOWOHL NICHTPOLAREN ALS AUCH POLAREN SUBSTRATEN
ADHÉSIF THERMOFUSIBLE À BASE DE POLYOLÉFINE RÉACTIVE PRÉSENTANT UNE BONNE ADHÉRENCE SUR DES SUBSTRATS POLAIRES ET NON POLAIRES

(30) Priority: 08.09.2017 EP 17190111
(43) Date of publication of application: 15.07.2020
(73) Proprietor: Sika Technology AG, 6340 Baar (CH)
(72) Inventor: JANKE, Doreen, 25486 Alveslohe (DE); PASCHKOWSKI, Kai, 21635 Jork (DE); CORDES, Mathias, 22525 Hamburg (DE)
(74) Representative: Sika Patent Attorneys
(86) International application number: PCT/EP2018/074092
(87) International publication number: WO 2019/048593

(56) References cited:
- EP-A1- 1 788 035
- US-B2- 8 865 822

## Description

### Technical field

The invention relates to reactive polyolefin hot-melt adhesives having good adhesion on non-polar substrates, in particular on polypropylene and as well as on polar substrates, in particular poly (methyl methacrylate) (PMMA). The invention also relates to the use of adhesive composition as an assembly adhesive, a laminating adhesive, or as an adhesive for the building of sandwich elements, in particular in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures. The chemical curing of the polymers can be initiated, for example, by heating or exposing the composition to water. Moisture curing hot-melt adhesives typically contain polymers functionalized with isocyanate or silane groups, which enable the crosslinking of the polymer chains upon contact with water, in particular with atmospheric moisture.

Typical moisture curing hot-melt adhesives used in the automotive industry as assembly adhesives include polyurethane based and polyolefin based hot melt adhesives. Reactive polyurethane hot-melt (PU-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. State-of-the-Art PU-RHM adhesives typically have the disadvantage of having a poor adhesion on non-polar substrates such as polypropylene and polyethylene. In case these adhesives are used for bonding of non-polar substrates, the surfaces of the substrates have to be treated with a primer, which significantly increases the total application costs.

Reactive polyolefin hot-melt adhesives (PO-RHM), especially the ones based on amorphous poly-α-olefins (APAO), have highly non-polar properties and are, therefore, in principle suitable for bonding non-polar substrates without pre-treatment of the surfaces with a primer composition. Reactive polyolefin hot-melt adhesives based on silane-grafted poly-α-olefins are disclosed, for example, in US 5,994,474 and US 8,865,822. When contacted with water, the silane groups of the polyolefin polymers, such as methoxysilane groups, react with water to form silanols, which subsequently undergo reaction with other silanol groups to form covalent bonds between individual polymer molecules as part of a condensation reaction. State-of-the-Art (PO-RHM) adhesives based on silane-grafted polyolefin polymers have the disadvantage of having a relatively poor adhesion on polar substrates, such as PMMA. Therefore, these types of adhesives based on silane-grafted amorphous poly-α-olefins have traditionally found only limited use in boding of non-polar substrates with polar substrates.

There is thus a need for an improved PO-RHM adhesive composition, which provides good adhesion on both non-polar and polar substrates.

### Summary of the invention

The object of the present invention is to provide an adhesive composition, which overcomes or at least mitigates the disadvantages of the prior art PO-RHM adhesives as discussed above.

In particular, it is an object of the present invention to provide a moisture curing adhesive composition, which has good adhesion on various non-polar and polar substrates.

The subject of the present invention is an adhesive composition as defined in claim 1.

It was surprisingly found out that an adhesive composition comprising at least one thermoplastic silane group containing poly-**α**-olefin and an adhesion promoter obtained from reacting at least one monoisocyanate and at least one isocyanate reactive silane provides good adhesion on various non-polar and polar substrates, in particular on polypropylene and PMMA substrates.

One of the advantages of the adhesive composition of the present invention is that the adhesion on non-polar substrates can be improved without having a negative impact on the other important properties, such as open time, softening point, and application viscosity of the adhesive composition.

Other aspects of the present invention are presented in other independent claims. Preferred aspects of the invention are presented in the dependent claims.

### Detailed description of the invention

The subject of the present invention is an adhesive composition comprising:
a) At least one thermoplastic silane group containing poly-α-olefin **P** that is solid at a temperature of 25°C and
b) At least one reaction product **RP** of at least one monoisocyanate **MI** with at least one isocyanate reactive silane **SI** containing only one isocyanate reactive group selected from the group consisting of hydroxyl group, mercapto group and amino group.

The term "α-olefin" designates an alkene having the molecular formula CₓH2ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "α-olefins" according to the present disclosure.

The term "poly-α-olefin" designates homopolymers and copolymers obtained by polymerization or oligomerization of α-olefins or multiple distinct α-olefins.

The term "polyolefin wax" designates low molecular weight polymers of linear or branched α-olefins having from 2 to 30 carbon atoms and a number average molecular weight (Mₙ) in the range of 5,000 - 25,000 g/mol. They include both homopolymers and copolymers of the above mentioned linear or branched α-olefins. Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

The prefix "mono" in substance designations such as "monool" or "monoisocyanate" refers to substances which in formal terms contain one per molecule of the functional group that occurs in their designation. A monool, for example, is a compound having one hydroxyl group, and a monoisocyanate is a compound having one isocyanate group.

The term "functionalized polymer" designates polymers which are chemically modified so as to contain one or more functional groups on the polymer backbone. In contrast, the term "non-functionalized polymer" designates polymers which are not chemically modified so as to contain functional groups, for example, epoxy, silane, sulfonate, amide, or anhydride groups, on the polymer backbone. In the present document the terms "non-functionalized and "unmodified" are used interchangeably.

The term "silane" refers to a compounds, which have at least one, typically two or three, alkoxy groups or acyloxy groups directly bonded to the silicon atom by Si-O bonds and on the other hand, at least one organic radical bound directly to the silicon atom by an Si-C bond. For example, siloxane or silicones are not to be considered as silanes according to the present disclosure.

The term "silane group" refers to silicon-containing group bound to the organic radical of a silane via the Si-C bond. The silanes and/or their silane groups have the property of undergoing hydrolysis upon contact with moisture. The terms "silane group" and "alkoxysilane group" are used interchangeably. The term "silane-functional" denotes compounds containing silane groups. "Silane-functional polymers" are thus polymers containing at least one silane group.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography.

The term "softening point" or "softening temperature" designates a temperature at which compound softens in a rubber-like state, or a temperature at which the crystalline portion within the compound melts. The softening point can be measured by a Ring and Ball method according to DIN EN 1238.

The term "graft degree" designates the ratio of polymer groups in side chains to the polymer constituting the main chain of the grafted compound expressed as weight percentage. In the present disclosure the terms "graft degree", "grafting degree", and "degree of grafting" are used interchangeably.

The term "open time" designates the length of a time period during which an adhesive applied to a surface of a substrate is still able to form an adhesive bond after being contacted with another substrate.

The "amount of at least one component X" in a composition, for example "the amount of the at least one poly-α-olefin **P**" refers in the present document to the sum of the individual amounts of all poly-α-olefins **P** contained in the composition. For example, in case the composition comprises 20 wt.-% of at least one poly-α-olefin **P**, the sum of the amounts of all poly-α-olefins **P** contained in the composition equals 20 wt.-%.

The term "room temperature" refers to a temperature of ca. 23°C.

A dashed line in the chemical formulas of this document represents the bonding between a moiety and the corresponding rest of the molecule.

The adhesive composition of the present invention comprises at least one reaction product **RP** of at least one monoisocyanate **MI** and at least one isocyanate reactive silane **SI** containing only one isocyanate reactive group selected from the group consisting of a hydroxyl group, mercapto group and amino group. The reaction can be carried out at a temperature in the range of 30 - 100°C, more preferably of 40 - 80°C, optionally in the presence of a catalyst.

The reaction product **RP** can have an average molecular weight (Mₙ) of not more than 1,500 g/mol, preferably not more than 1,000 g/mol. Reaction products **RP** having higher average molecular weights, for example, those having an average molecular weights (Mₙ) of more than 1,500 g/mol, are not suitable and preferably not used in the adhesive composition. It is also preferred that the reaction product **RP** does not include any unreacted isocyanate groups.

The amount of the at least one reaction product **RP** in the adhesive composition is preferably adjusted such as to obtain improved adhesion on non-polar substrates compared to similar adhesive compositions not containing the reaction product **RP**. However, increasing the amount of the at least one reaction product **RP** above certain limit may also result in deterioration of the other application relevant properties of the adhesive composition such as green strength and tensile strength of the cured adhesive. Preferably, the at least one reaction product **RP** comprises 0.1 - 5.0 wt.-%, more preferably 0.25 - 2.5 wt.-%, most preferably 0.5 - 1.5 wt.-%, of the total weight of the adhesive composition.

The at least one isocyanate reactive silane **SI** is preferably a compound of formula (I): 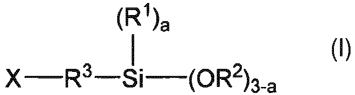 wherein
R¹ is a linear or branched C₁ - C₁₀ alkyl group,
R² is a linear or branched C₁ - C₅ alkyl group or an acyl group,
R³ is a linear, branched or cyclical C₁ - C₂₀ alkyl group, or arylalkyl group,
a is 0, 1, or 2, and
X is an isocyanate reactive group selected from the group consisting of -OH, - SH, -NH₂, and -NHR₄,
wherein
R₄ is a C₁ - C₂₀ alkyl moiety or a C₆ - C₁₂ cycloalkyl or arylalkyl moiety or a substituent of the formula (II):

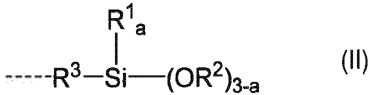

In the formula (I), R¹ is preferably a linear or branched C₁ - C₈ alkyl group, more preferably a linear or branched C₁ - C₄ alkyl group, for example methylene or ethylene.

In the formula (I), R² is preferably a linear or branched C₁ - C₅ alkyl group, more preferably a linear or branched C₁ - C₄ alkyl group, for example methylene or ethylene, or an acyl group.

In the formula (I), R³ is preferably a linear or branched C₁ - C₁₀ alkyl group, more preferably a linear or branched C₁ - C₈ alkyl group, such as methylene, ethylene, propylene, 2-methylpropylene, or 3,3-dimethylbutylene, for example, most preferably methylene or propylene.

Preferably, the at least one isocyanate reactive silane **SI** of formula (I) is a mercaptosilane, prefereably a mercaptosilane selected from the group consisting of mercaptomethyl trimethoxysilane, mercaptomethyl triethoxysilane, mercaptomethyl dimethoxymethylsilane, mercaptomethyl diethoxymethylsilane, 3-mercapto propyltrimethoxysilane, 3-mercapto propyltriethoxysilane, 3-mercapto propyltriisopropoxysilane, 3-mercapto propyldimethoxymethylsilane, 3-mercapto propyldiethoxymethylsilane, 3-mercapto-2-methylpropyltrimethoxysilane and 4-mercapto-3,3-dimethylbutyltrimethoxysilane.

According to one or more embodiments, the at least one isocyanate reactive silane **SI** is selected from the group consisting of 3-mercapto propyltrimethoxysilane, 3-mercapto propyltriethoxysilane, mercaptomethyltrimethoxysilane, mercaptomethyltriethoxysilane, and 3-mercapto propyldimethoxymethylsilane, preferably from the group consisting of 3-mercapto propyltrimethoxysilane, 3-mercapto propyltriethoxysilane, and 3-mercapto propyldimethoxymethylsilane.

The at least one monoisocyanate **MI** is preferably selected from the group consisting of para-toluenesulfonyl isocyanate and a reaction product of 2,4-toluene diisocyanate or 2,6-toluene diisocyanate with an alcohol of the formula R⁵-OH wherein R⁵ is a linear or branched C₁ - C₁₈ alkyl group. According to one or more embodiments, the at least one monoisocyanate **MI** is a para-toluenesulfonyl isocyanate.

Preferably, the reaction product **RP** is obtained by reacting a reaction mixture comprising 30 - 60 wt.-%, preferably 40 - 55 wt.-%, of the at least one monoisocyanate **MI** and 30 - 60 wt.-%, preferably 40 - 55 wt.-%, of the at least one isocyanate reactive silane **SI**, all proportions being based on the total weight of the reaction mixture.

The adhesive composition of the present invention comprises at least one thermoplastic silane group containing poly-α-olefin **P** that is solid at a temperature of 25°C. Such silane group-containing poly-α-olefins are known to a person skilled in the art and they can be produced, for example, by grafting unsaturated silanes, such as vinyl-trimethoxysilane, into poly-α-olefins. Preferably, the at least one thermoplastic silane group containing poly-α-olefin **P** is a silane-grafted poly-α-olefin, wherein poly-α-olefin has been obtained by Ziegler-Natta catalyzed polymerization or by metallocene catalyzed polymerization.

Suitable thermoplastic silane group-containing poly-α-olefins include silane grafted homopolymers, copolymers, and terpolymers of monomers selected from the group consisting of ethylene, propylene, 1-butene and higher α-olefins. Particularly suitable thermoplastic silane group containing poly-α-olefins include silane grafted homopolymers of propylene, silane grafted copolymers of propylene and ethylene, silane grafted copolymers of propylene and 1-butene or other higher α-olefins, and silane grafted terpolymers of ethylene, propylene, and 1-butene. Preferably, the at least one silane group containing thermoplastic poly-α-olefin is a silane grafted atactic poly-α-olefin, in particular a silane grafted amorphous poly-α-olefin (APAO).

The thermoplastic silane group containing poly-α-olefin can have a grafting degree of at least 0.5 wt.-%, preferably at least 1.5 wt.-%, relative to the weight of the non-grafted poly-α-olefin. In case the poly-α-olefin of the thermoplastic silane-grafted poly-α-olefin is produced by means of the Ziegler-Natta process, the grafting degree is preferably in the range of 1.0 - 8.0 wt.-%, in particular 1.5 - 5.0 wt.-%.

The at least one thermoplastic silane-group containing poly-α-olefin can have a softening point, determined by using the Ring and Ball method as defined in DIN EN 1238 standard, in the range of 60 - 160°C, preferably 70 - 140°C, most preferably 80 - 120°C and/or an average molecular weight (Mₙ) in the range of 2,500 - 30,000 g/mol, preferably 5,000 - 25,000 g/mol.

The amount of the at least one thermoplastic silane-group containing poly-α-olefin in the adhesive composition is not particularly restricted. The at least one thermoplastic silane-group containing poly-α-olefin can be present in the adhesive composition in an amount of at least 30 wt.-%, in particular 30 - 90 wt.-%, preferably 35 - 75 wt.-%, more preferably 35 - 65 wt.-%, most preferably 40 - 60 wt.-%, based on the total weight of the adhesive composition.

The adhesive composition may comprise at least two different thermoplastic silane group containing poly-α-olefins that are solid at 25°C. The adhesive composition may comprise, for example, at least one first thermoplastic silane-grafted poly-α-olefin having a grafting degree in the range of 1.0 - 3.0, and at least one second thermoplastic silane-grafted poly-α-olefin having a grafting degree in the range of 3.5 - 8.0.

The hot-melt adhesive composition may further comprise, in addition to the at least one thermoplastic silane group containing poly-α-olefin **P**, at least one additional thermoplastic polymer, which is solid at 25°C and which does not contain any silane groups. This additional thermoplastic polymer can be a homopolymer or copolymer of unsaturated monomers, selected, for example, from the group consisting of ethylene, propylene, butylene, isobutylene, isoprene, vinyl acetate and vinyl ester with C₃ to C₁₂ carboxylic acids, and (meth)acrylate. The term "(meth)acrylate" designates in the present document both acrylates and methacrylates. Particularly suitable additional thermoplastic polymers without silane goups include ethylene-vinyl acetate (EVA), poly-α-olefins as well as polypropylene and polyethylene homopolymers in functionalized or in non-functionalized form.

According to one or more embodiments, the adhesive composition comprises at least one thermoplastic poly-α-olefin without silane groups that is solid at temperature of 25°C. Preferably, the at least one thermoplastic poly-α-olefin without silane groups is an atactic poly-α-olefin without silane groups, more preferably an atactic poly-α-olefin without silane groups obtained by metallocene catalyzed polymerization.

The at least one thermoplastic poly-α-olefin without silane groups can have a softening point, determined by using the Ring and Ball method as defined in DIN EN 1238 standard, in the range of 60 - 160°C, preferably 70 - 140°C, most preferably 80 - 120°C and/or an average molecular weight (Mₙ) in the range of 2,500 - 100,000 g/mol, preferably 5,000 - 50,000 g/mol.

Preferably, the at least one thermoplastic poly-α-olefin without silane groups that is solid at a temperature of 25°C is present in the adhesive composition in an amount of 5 - 50 wt.-%, more preferably 10 - 40 wt.-%, most preferably 10 - 35 wt.-%, based on the total weight of the adhesive composition.

The weight ratio of the total amount of silane group containing poly-α-olefins to the total amount of additional thermoplastic polymers without silane groups in the adhesive composition can be in the range of from 1:1 to 20:1, preferably 1.5:1 to 10:1.

The adhesive composition can further comprise at least one polar-modified polyolefin wax. The addition of polar-modified polyolefin waxes has been found to improve the adhesion of the adhesive composition on polar substrates. Suitable polar-modified polyolefin waxes are produced by grafting polar olefin monomers, for example, α-β-unsaturated carboxylic acids and/or derivatives thereof, for example (meth)acrylic acid or maleic acid anhydride and/or substituted and/or unsubstituted styrenes, to polyolefin waxes.

According to one or more embodiments, the adhesive composition further comprises at least one maleic acid anhydride functionalized polyolefin wax. Suitable maleic acid anhydride functionalized polyolefin waxes include waxes of ethylene and propylene homo- and copolymers grafted with maleic acid anhydride, in particular, polypropylene or polyethylene wax grafted with maleic acid anhydride.

Preferably, the at least one maleic acid anhydride functionalized polyolefin wax has a softening point, determined by using the Ring and Ball method as defined in DIN EN 1238 standard, of not more than 180°C, preferably not more than 160°C. It may be preferable that the at least one maleic acid anhydride functionalized polyolefin wax has a softening point in the range of 80 - 180°C, more preferably 100 - 160°C.

The grafting degree of the at least one maleic anhydride functionalized polyolefin wax can be at least 1 wt.-%, for example, at least 3 wt.-%, relative to the weight of the non-functionalized wax. For example, the grafting degree can be in the range of 2 - 15 wt.-%, preferably 4 - 15 % wt.-%, most preferably 8 - 12 wt.-%, relative to the weight of the non-functionalized wax. The at least one maleic anhydride functionalized polyolefin wax may have a melt viscosity at a temperature of 170 °C in the range from 10 to 10,000 mPa·s, in particular, from 1,000 to 5,000 mPa·s.

The at least one maleic anhydride functionalized polyolefin wax may be present in the adhesive composition in an amount of at least 0.5 wt.-%, based on the total weight of the adhesive composition. Preferably, the at least one maleic anhydride functionalized polyolefin wax is present in the adhesive composition in an amount of 0.5 - 15.0 wt.-%, preferably 1.0 - 12.5 wt.-%, more preferably 1.5 -10.0 wt.-%, most preferably 2.5 - 7.5 wt.-%, based on the total weight of the adhesive composition.

The adhesive composition can further comprise at least one hydrocarbon resin that is tackifying at a temperature of 25°C. Examples of suitable hydrocarbon resins include natural resins, chemically modified natural resins, and synthetic resins. Preferably, the at least one hydrocarbon resin has a softening point, determined by using the Ring and Ball method as defined in DIN EN 1238 standard, of at least 50°C, preferably in the range of 60 - 140°C, more preferably 70 - 130°C.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins obtainable from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers in the present document to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, C₅, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1-3-hexadiene, 1-4-hexadiene, cyclopentadiene, and dicyclopentadiene. Aromatic monomer can include C₈, C₉, and C₁₀ aromatic monomer, such as styrene, indene, derivatives of styrene, derivatives of indene, coumarone and combinations thereof.

In particular, suitable synthetic resins include synthetic hydrocarbon resins made by polymerizing mixtures of unsaturated monomers that are obtained as by-products of cracking of natural gas liquids, gas oil, or petroleum naphthas. Synthetic hydrocarbon resins obtained from petroleum based feedstocks are referred in the present document as "petroleum hydrocarbon resins". These include also pure monomer aromatic resins, which are made by polymerizing aromatic monomer feedstocks that have been purified to eliminate color causing contaminants and to precisely control the composition of the product. Petroleum hydrocarbon resins typically have a relatively low average molecular weight (Mₙ), such in the range of 250 - 5,000 g/mol and a glass transition temperature of above 0 °C, preferably equal to or higher than 15°C, more preferably equal to or higher than 30°C.

The at least one hydrocarbon resin may be selected from the group consisting of C5 aliphatic petroleum hydrocarbon resins, mixed C5/C9 aliphatic/aromatic petroleum hydrocarbon resins, aromatic modified C5 aliphatic petroleum hydrocarbon resins, cycloaliphatic petroleum hydrocarbon resins, mixed C5 aliphatic/cycloaliphatic petroleum hydrocarbon resins, mixed C9 aromatic/cycloaliphatic petroleum hydrocarbon resins, mixed C5 aliphatic/cycloaliphatic/C9 aromatic petroleum hydrocarbon resins, aromatic modified cycloaliphatic petroleum hydrocarbon resins, and C9 aromatic petroleum hydrocarbon resins as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50%, 70%, or 90%.

According to one or more embodiments, the at least one hydrocarbon resin is a non-hydrogenated aromatic petroleum hydrocarbon resin, preferably selected from the group consisting of non-hydrogenated mixed C5/C9 aliphatic/aromatic petroleum hydrocarbon resins, non-hydrogenated aromatic modified C5 aliphatic petroleum hydrocarbon resins, non-hydrogenated aromatic modified cycloaliphatic petroleum hydrocarbon resins, and non-hydrogenated C9 aromatic petroleum hydrocarbon resins.

Suitable commercially available non-hydrogenated aromatic petroleum hydrocarbon resins having a softening point equal to or higher than 70°C include, for example, Wingtack® Plus, Wingtack® Extra, Wingtack® ET, Wingtack® STS, and Wingtack® 86 (from Cray Valley); Piccotac® 8095, Piccotac® 6095E, Picco AR100, Picco® 5120, Picco® 5140, Picco® 6100, Picco® 2215, Picco® A100, Picco® A120, and Picco® A140 (from Eastman Chemicals), Hikotack® P-110S, Hikotack® P-120, Hikotack® P-120S, Hikotack® P-120P, Hikotack® P-120H, Hikotack® P-120HS, Hikotack® P-140, Hikotack® P-150, and Hikotack® C-120 (from Kolon Industries); and Escorez® 2184 (from ExxonMobil).

The amount of the at least one hydrocarbon resin in the adhesive composition is not particularly restricted. The at least one hydrocarbon resin may be present in the adhesive composition in an amount of at least 1.0 wt.-%, in particular at least 2.5 wt.-%, based on the total weight of the adhesive composition. Preferably, the at least one hydrocarbon resin is present in the adhesive composition in an amount of 1.0 - 30.0 wt.-%, preferably 2.5 - 25.0 wt.-%, more preferably 2.5 - 20.0 wt.-%, most preferably 5.0 - 15.0 wt.-%, based on the total weight of the adhesive composition.

The adhesive composition can further comprise, in addition to the at least one polar-modified polyolefin wax, at least one silane functionalized polyolefin wax. Suitable silane functionalized polyolefin waxes are produced by grafting silanes to polyolefin waxes. Preferred silane functionalized polyolefin waxes include waxes of ethene and propene homo- or copolymers grafted with silane, in particular, a polypropylene or polyethylene waxes grafted with silane.

The at least one silane functionalized polyolefin wax may have a softening point, determined by using the Ring and Ball method as defined in DIN EN 1238 standard, in the range of 50 - 150°C, preferably 60 - 120°C, most preferably 60 - 100°C.

The grafting degree of the at least one silane functionalized polyolefin wax can be at least 1 wt.-%, for example, at least 3 wt.-%, relative to the weight of the non-functionalized polyolefin wax. For example, the graft degree of the at least one silane functionalized polyolefin wax can be in the range of 2.0 - 15.0 wt.-%, preferably 4.0 - 15.0 wt.-%, most preferably 8.0 - 12.0 wt.-%, relative to the weight of the non-functionalized polyolefin wax.

The amount of the at least one silane functionalized polyolefin wax in the adhesive composition is not particularly restricted. The at least one silane functionalized polyolefin wax may be present in the adhesive composition in an amount of at least 1.0 wt.-%, in particular at least 2.5 wt.-%, based on the total weight of the adhesive composition. Preferably, the at least one silane functionalized polyolefin wax is present in the adhesive composition in an amount of 1.0 - 30.0 wt.-%, preferably 2.5 - 25.0 wt.-%, more preferably 2.5 - 20.0 wt.-%, most preferably 5.0 - 15.0 wt.-%, based on the total weight of the adhesive composition.

The adhesive composition may optionally contain additional constituents (auxiliaries) which are customary for hot-melt adhesives. Examples of suitable auxiliaries include fillers, catalysts, plasticizers, UV absorbers, UV stabilizers and heat stabilizers, antioxidants, flame retardants, optical brighteners, pigments, dyes, and dryers. The auxiliaries, if used at all, preferably comprise not more than 25 wt.-%, more preferably not more than 15 wt.-%, most preferably not more than 5 wt.-%, of the total weight of the adhesive composition.

Suitable as catalysts are those which accelerate the reaction of the silane groups with moisture. Examples of suitable catalysts include organic phosphorus and tin compounds, for example, dibutyl tin laurate (DBTL). Suitable organic phosphorus compounds include, for example, phosphoric acid esters, which can be used as mixtures of mono-, di- and triesters of phosphoric acid that are esterified with alkanols, for example, those having a chain length in the range from 12 to 24 carbon atoms. The acid number of the phosphoric acid esters can be in the range from approximately 120 to 240 mg/KOH per gram.

The catalysts are preferably present in the adhesive composition in an amount of 0.005 - 2.00% by weigh, more preferably 0.05 - 1.00% by weight, based on the total weigh of the adhesive composition.

The adhesive composition of the invention has good workability under usual application conditions, in particular at temperatures from 100 to 170°C, meaning that at application temperature the adhesive has sufficiently low viscosity to enable application to a substrate in a molten state. The adhesive composition also develops a high initial strength immediately after the application to a substrate upon cooling even before the initiation of the crosslinking reaction with atmospheric moisture. In addition, the adhesive composition cures quickly in the presence of moisture without producing an odor and without forming any bubbles during the curing process.

Preferably, the adhesive composition has a viscosity at a temperature of 140°C of less than 100,000 mPa·s, preferably of less than 50,000 mPa·s, most preferably less than 25,000 mPa·s. The viscosity at temperature of 140°C can be measured using conventional viscometers at 5 revolutions per minute, for example by using a Brookfield DV-2 Thermosel viscometer with a spindle No. 27.

Another subject of the present invention is use of the adhesive composition of the present invention as an assembly adhesive, a laminating adhesive, or as an adhesive for the building of sandwich elements.

Still another subject of the present invention is a method for producing a composite element, the method comprising steps of:
i) Applying a melted adhesive composition of the present invention to a first surface of a first substrate to form an adhesive film,
ii) Contacting the adhesive film with a first surface of a second substrate,
iii) Chemically curing the adhesive film with water, in particular with atmospheric moisture.

The first and second substrates are preferably sheet-like articles having first and second major surfaces defined by peripheral edges or three-dimensional shaped articles.

In the method for producing a composite element, the adhesive composition is heated to a temperature above the softening point of the adhesive composition and applied on the surface of the first substrate in molten state using any conventional technique, for example, by slot die coating, roller coating, extrusion coating, calender coating, or spray coating. The adhesive composition can be applied to a surface with a coating weight of, for example, 50 - 500 g/m², preferably 65 - 300 g/m².

Especially in case the adhesive composition is applied to the surface of the first substrate as a thin film having a coating weight of, for example, less than 150 g/m², in particular less than 100 g/m², the adhesive film formed in step i) may be reactivated by heating before being contacted with the surface of the second substrate in step ii). The reactivation temperature depends on the embodiment of the adhesive composition. It may be preferable, for example, that the adhesive film is reactivated by heating to a temperature of 60 - 200°C, in particular 70 - 160°C, preferably 70 - 130°C. The heating of the adhesive film can be conducted using any conventional technique, such as heating in an oven, heating by air stream, or heating with infrared (IR)-radiation. The reactivated adhesive film is preferably contacted with the second substrate within short time after the reactivation temperature is reached, in any case within the open time of the adhesive composition.

The method for producing a composite element can comprise a further step of preheating the second substrate before it is contacted with the adhesive film in step ii). The temperature to which the second substrate is heated depends on the composition of the second substrate and on the embodiment of the adhesive composition. For example, in case second substrate is composed of ABS, it is preferably preheated to a temperature of not more than 100°C. It may be preferable that the second substrate is preheated to a temperature in the range of 50 - 100°C, more preferably 50 - 80°C, before being contacted with the adhesive film.

After the adhesive film has been contacted with the second substrate, the adhesive composition develops a certain initial adhesive strength by physical curing, i.e. by cooling. Depending on the application temperature and on the embodiment of the adhesive composition, in particular on the reactivity of the adhesive, the chemical curing reactions may begin during the application of the adhesive composition on the surface of the first substrate. Typically, however, major part of the chemical curing occurs after the application of adhesive, in particular, after the applied adhesive film has been contacted with the second substrate to form the composite element.

Typically, the adhesive bond has a thickness of at least 10 µm. The term "thickness of adhesive bond" refers here to the thickness of the cured adhesive film between the first and second substrate. It may be preferable that the adhesive bond has a thickness of 10 - 1000 µm, such as 25 - 500 µm, preferably 50 - 150 µm.

As and when required, the first and second substrate may be pretreated prior to the application of the adhesive composition. Such pretreatments include, in particular, physical and/or chemical cleaning and activating processes, examples being abrading, sandblasting, brushing, corona treatment, plasma treatment, flame treatment, partial etching or the like, or treatment with cleaners or solvents, or the application of an adhesion promoter, an adhesion promoter solution, or a primer.

The first and second substrate can be composed of any conventional material including polymeric material, metal, painted metal, glass, wood, wood derived materials such as natural fiber polypropylene (NFPP), and fiber materials. Suitable polymeric materials include polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The substrates can be composed of a single layer or of several layers of different types of materials. The layer(s) composed of polymeric materials can further contain additives such as fillers, plasticizers, flame retardants, thermal stabilizers, antioxidants, pigments, dyes, and biocides.

The term "fiber material" refers to a material composed of fibers. The fibers comprise or consist of organic, inorganic or synthetic material. Examples of suitable fibers include cellulose fibers, cotton fibers, protein fibers, glass fibers, and synthetic fibers made of polyester, or homopolymer or copolymer of ethylene and/or propylene, viscose, or mixtures thereof. The fibers can be short fibers or long fibers, spun, woven or unwoven fibers or filaments. The fibers can moreover be aligned or drawn fibers. Moreover, it can be advantageous to use different fibers, both in terms of geometry and composition, together. Felt and fleece can be mentioned as particularly preferable fiber materials.

The first and second substrates are preferably single- or multi-layer sheet-like elements having a total thickness in the range of 0.05 - 5.0 mm, preferably 0.1 - 2.5 mm, in particular 0.2 - 1.0 mm. In the context of the present invention, the thickness of sheet-like elements can be determined by using a measurement method as defined in DIN EN 1849-2 standard.

It may be preferable that the first substrate, or in case the first substrate is composed of more than one layer, the layer constituting the first surface of the first substrate, is composed of non-polar material, preferably synthetic polymeric non-polar material, and the second substrate, or in case the second substrate is composed of more than one layer, the layer constituting the first surface of the second substrate, is composed of a polar material, preferably synthetic polymeric polar material, metal, or glass. It may also be preferable that the that the first substrate, or in case the first substrate is composed of more than one layer, the layer constituting the first surface of the first substrate, is composed of a polar material, preferably synthetic polymeric polar material, metal, or glass, and the second substrate, or in case the second substrate is composed of more than one layer, the layer constituting the first surface of the second substrate, is composed of non-polar material, preferably synthetic polymeric non-polar material.

Preferably, the non-polar material is selected from the group consisting of polyethylene and polypropylene and the polar material is selected from the group consisting of poly(methylmethacrylate) (PMMA), polycarbonate (PC), polyvinylchloride (PVC), acrylonitrile butadiene styrene copolymer (ABS), and polyamide (PA).

According to one or more embodiments, the first substrate is single-layer film composed of polyolefin material, preferably polyethylene or polypropylene and the second substrate is a single-layer film composed of synthetic polar material, preferably PMMA, PA, or ABS, most preferably of PMMA or the first substrate is single-layer polymeric film composed of synthetic polar material, preferably of PMMA, PA, or ABS, most preferably of PMMA and the second substrate is a single-layer polymeric film composed of polyolefin material, preferably polyethylene or polypropylene.

Another subject of the present invention is a composite element comprising:
a) A first substrate,
b) A layer of adhesive composition of the present invention, and
c) A second substrate, wherein
the layer of adhesive composition is arranged between the first and second substrates such that the substrates are adhesively bonded to each other with the layer of adhesive composition.

The first and second substrates are preferably single- or multi-layer sheet-like elements having a total thickness, measured by using the method as defined in DIN EN 1849-2 standard, in the range of 0.05 - 5.0 mm, preferably 0.1 - 2.5 mm, in particular 0.2 - 1.0 mm.

Preferably, the first substrate is single- or multiple- layer film composed of non-polar material and the second substrate is a single- or multiple-layer film composed of polar material. According to one or more embodiments, the first substrate is single-layer film composed of polyolefin material, preferably polyethylene or polypropylene and the second substrate is a single-layer film composed of synthetic polar material, preferably PMMA, PA, or ABS, most preferably of PMMA.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings compounds and products shown in Table 1 were used in the examples.

**Table 1**

| | | |
|---|---|---|
| Wingtack® 86 | Aromatically modified C5-hydrocarbon resin | Cray Valley |
| Licocene® PP MA 6452 | Maleic acid anhydride grafted polypropylene wax, softening point 143°C | Clariant |
| Vestoplast® 408 | Amorphous poly-α-olefin, softening point 118°C | Evonik Industries |
| Vestoplast® 206 | Silane grafted amorphous poly-α-olefin, softening point 98°C | Evonik Industries |
| Licocene® PP SI 1362 | Silane grafted polypropylene wax (10%), softening point 80°C | Clariant |
| Hordaphos® MDST | Phosphoric acid ester | Clariant |
| Irganox® 1010 | Antioxidant | BASF |
| Additive TI | p-Toluenesulfonyl isocyanate | Borchers |
| Silanil® 442 | 3-mercaptopropyltrimethoxysilane, liquid | BRB International BV |
| Desmodur® 44 MC | Monomeric diphenylmethane-4,4'-diisocyanate | Covestro |

The adhesive compositions presented in Tables 2 and 3 were prepared according to the procedures as presented below.

### Preparation of reaction product HA100

1 mole of mercaptosilane and 1 mole of additive TI were charged into a reactor can and the resulting mixture was reacted with stirring (∼80 rpm) for three hours under vacuum (- 0.9 bar) at a temperature of 60 °C. The obtained reaction product was filled in tubes and stored at room temperature in the absence of moisture.

### Preparation of reaction product HA1

The polyisocyanate was first introduced into a reactor and melted under vacuum (-0.9 bar) followed by the addition of the mercaptosilane. The ratio of the isocyanate groups to mercapto groups in the reaction mixture was 1:1.05. The mixture was then reacted with stirring for 5 hours at a temperature of 60°C until no isocyanate groups could be detected. The mixing was then stopped and the mixture was filled in tubes and stored at room temperature in the absence of moisture.

### Preparation of the adhesive compositions

The non-functionalized amorphous poly-α-olefin, the hydrocarbon resin, and the waxes in the quantities as presented in Tables 2 and 3 were charged into a tin can of a standard lab reactor equipped with a nonstick coating and a four-neck lid with ground glass joints. The contents of the can were then heated to a temperature of 160°C. After the raw materials were melted, the reactor was closed with the lid and the contents of the reactor were dewatered under vacuum with stirring at a temperature of 160°C for 1 hour. After the dewatering the mixing was stopped and the reactor was subsequently opened for airing.

The silane grafted poly-α-olefin and silane grafted polypropylene wax, which had been previously dried for three hours in an oven at a temperature of 140°C, were then charged into the reactor followed by the addition of the catalyst. The reactor was then closed and the contents were mixed under vacuum for 30 minutes at a temperature of 160°C.

Finally, the reaction product HA100/HA1 was added to the reactor and the contents were mixed under vacuum with stirring for 20 minutes at a temperature of 140°C. The obtained adhesive composition was filled in tubes and stored at room temperature in the absence of moisture.

The adhesive compositions were then characterized using the following measurement methods.

### Viscosity at 140°C

The sample adhesive composition provided in a sealed tube was preheated in an oven at a temperature of 140°C for a time period of 20 minutes. After the heating, a sample of 9.5 g of the adhesive composition was weighted and placed in a disposable sleeve to a viscometer. The viscosity was measured at temperature of 140°C at 5 revolutions per minute using a Brookfield DV-2 Thermosel viscometer with a spindle No. 27. The values obtained with 20 minutes of tempering at the measurement temperature and five minutes of measurement were recorded as representative viscosities.

### Open time

The sample adhesive composition provided in a sealed tube was first preheated in an oven to at temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the adhesive no longer could be transferred to the paper strip, i.e. the surface of the removed paper strip remained dry without any adhesive. The time interval between the starting point of the measurement and the last sampling point was recorded as the open time (in seconds) of the adhesive composition

The values of open time presented in Tables 2 and 3 have been obtained as an average of three measurements conducted with the same adhesive composition.

### Softening point

The sample adhesive composition provided in a sealed tube was preheated in an oven at a temperature of 140°C for a time period of 20 minutes. The molten adhesive was applied bubble free in a metal ring. After cooling the disk-shaped adhesive specimen was removed from the ring and loaded into fitting of a ring and ball tester. The temperature of the adhesive specimen is increased by 6°C per minute and the temperature at which the ball placed on the adhesive specimen falls through the specimen is recorded as the softening point.
The values of softening point presented in Tables 2 and 3 have been obtained as an average of two measurements conducted with the same adhesive composition.

### Roll peel strength TPO-PMMA substrates

For the measurement of roll peel strengths, a test composite element composed of a thermoplastic polyolefin (TPO) foil bonded to a PMMA substrate using the tested adhesive composition were first prepared as follows.

The adhesive composition provided in a sealed tube was preheated in an oven at a temperature of 140°C for a time period of 20 minutes. After the heating, a sample of 20 g of the molten adhesive was applied with a doctor blade to surface of a silicone paper (B700 white, Laufenberg & Sohn KG) placed on a heating plate. The silicone paper had dimensions of 60 cm x 10 cm and the adhesive was applied as a film having a thickness of 100 µm and dimensions of 40 cm x 5 cm.

Immediately after the application of the adhesive, the silicone paper was removed from the heating plate and sample strips having a length of 10 cm were cut from the silicone paper. The adhesive film on the sample strip was then transferred to the surface of the TPO foil having dimensions of 20 cm x 5 cm x 2 mm. Before contacting with the PMMA substrate, the adhesive film on the TPO foil was reactivated by heating to a temperature of 200°C by means of an IR-heater. The TPO foil was then pressed against the PMMA substrate having dimensions of 15 cm x 5 cm x 3 mm by using a pressure of 1 bar. The prepared composite elements were stored one at standard climatic conditions (23°C, relative humidity of 55%) before measuring the roll peel strengths.

After the storing period, the roll peel strengths were measured using a Zwick/Roell Z020 material testing apparatus equipped with a roll-peeling device. The TPO foil was peeled off from the surface of the PMMA substrate at a peeling angle of 90° and at a constant cross beam speed of 100 ± 0.1 mm/min. The peeling of the TPO foil was continued until a length of approximately 3/4 of the length of the TPO-foil was peeled off. The peel resistance was calculated as average peel force per unit width of the TPO foil [N/ 50 mm] during peeling over a length of approximately 10 cm. The values for roll peel strength presented in Tables 2 and 3 have been obtained as average of two measurements conducted with composite elements produced with the same adhesive composition.

### Adhesion

The adhesive composition provided in a sealed tube was preheated in an oven to at temperature of 140°C for a time period of 20 minutes. The melted adhesive was then applied as a bead on the surface of a respective substrate (plate). The adhesive bead had dimensions of 8 cm x 1 cm x 3 mm and the substrate (plate) had dimensions of 10 cm x 2.5 cm x 5 mm. In each case, the substrate had been cleaned beforehand by wiping with a cloth soaked with isopropanol and left to dry for 5 minutes. The substrate coated with the bead was cured for 7 days at standard climatic conditions (23°C, relative humidity of 50%).

The adhesion was then tested as follows. A spatula having a width of 10 cm was applied on the reverse side of the substrate in the fringe area of the cured adhesive and by means of manual force one attempted to push the spatula in this fringe area. In case it was not possible to push the spatula into this fringe area, the adhesive composition was considered to have "good adhesion" on the respective substrate. In case it was possible to push the spatula in this fringe area and the adhesive ruptured or allowed itself to be removed by the fingers without much strain, the adhesive composition was considered to have "poor adhesion" on the respective substrate. If it was nonetheless possible to push the spatula into this area but the adhesive only let itself be removed with the application of substantial force, the adhesive composition was considered to have "average adhesion" on the respective substrate. The adhesion was correspondingly tested on non-polar and polar substrates including polypropylene (PP), polyethylene (PE), polyvinylchloride (PVC), wood (pine), polyamide (PA), polycarbonate (PC), acrylonitrile butadiene styrene copolymer (ABS), glass fiber reinforced plastic (GFRP), polyurethane (PUR), poly(methylmethacrylate) (PMMA), aluminum, and polyoxymethylene (POM).

**Table 2**

| **Composition [wt.-%]** | **Ref-1** | **Ref-2** | **Ex-1** | **Ref-3** | **Ref-4** |
|---|---|---|---|---|---|
| Reaction product HA1 | - | 1 | - | - | 1 |
| Reaction product HA100 | - | - | 1 | - | - |
| Wingtack® 86 | 10 | 10 | 10 | 10 | 10 |
| Licocene® PP MA 6452 | - | - | - | 5 | 5 |
| Vestoplast® 408 | 30 | 30 | 30 | 25 | 25 |
| Vestoplast® 206 | 50 | 49 | 49 | 50 | 49 |
| Licocene® PP SI 1362 | 9.35 | 9.35 | 9.35 | 9.35 | 9.35 |
| Hordaphos® MDST | 0.15 | 0.15 | 0.15 | 0.15 | 0.15 |
| Irganox® 1010 | 0.5 | 0.5 | 0.5 | 0.5 | 0.5 |
| Total | 100.0 | 100.0 | 100.0 | 100.0 | 100.0 |

| **Measured properties** | | | | | |
|---|---|---|---|---|---|
| Viscosity measured at 140°C [MPa·s] | 14500 | 14000 | 13800 | 15000 | 10000 |
| Open time, 500 µm [seconds] | 100.0 | 110.0 | 100.0 | 40 | 40 |
| Softening point [°C] | 99.0 | 100.0 | 102.0 | 130 | 130 |
| Roll peel strength, TPO-PMMA [N/cm] | 2 | 7.5 | 7 | 8 | 15 |
| Adhesion on PP | + | + | + | + | + |
| Adhesion on PE | - | - | - | - | - |
| Adhesion on PVC | - | - | - | - | - |
| Adhesion on wood (pine) | + | + | + | + | + |
| Adhesion on PA | - | ○+ | ○ | + | + |
| Adhesion on PC | - | - | - | + | + |
| Adhesion on ABS | - | + | ○ | + | + |
| Adhesion on GFRP | + | + | + | + | + |
| Adhesion on PUR | - | - | - | - | - |
| Adhesion on PMMA | - | + | + | + | + |
| Adhesion on aluminum | - | - | - | - | - |
| Adhesion on POM | - | - | - | - | - |

| | | | | | |
|---|---|---|---|---|---|
| - = poor adhesion, ○ = average adhesion, + = good adhesion | | | | | |

**Table 3**

| **Composition [wt.-%]** | **Ex-2** | **Ref-5** | **Ref-6** | **Ex-3** | **Ex-4** |
|---|---|---|---|---|---|
| Reaction product HA1 | - | 0.5 | 2 | - | - |
| Reaction product HA100 | 1 | - | - | 0.5 | 2 |
| Wingtack® 86 | 10 | 10 | 10 | 10 | 10 |
| Licocene® PP MA 6452 | 5 | 5 | 5 | 5 | 5 |
| Vestoplast® 408 | 25 | 25 | 25 | 25 | 25 |
| Vestoplast® 206 | 49 | 49 | 49 | 49 | 49 |
| Licocene® PP SI 1362 | 9.35 | 9.85 | 8.35 | 9.85 | 8.35 |
| Hordaphos® MDST | 0.15 | 0.15 | 0.15 | 0.15 | 0.15 |
| Irganox® 1010 | 0.5 | 0.5 | 0.5 | 0.5 | 0.5 |
| Total | 100.0 | 100.0 | 100.0 | 100.0 | 100.0 |

| **Measured properties** | | | | | |
|---|---|---|---|---|---|
| Viscosity measured at 140°C [MPa·s] | 10500 | 14500 | 9700 | 10800 | 9500 |
| Open time, 500 µm [seconds] | 50 | 40 | 40 | 40 | 40 |
| Softening point [°C] | 129 | 127 | 130 | 129 | 131 |
| Roll peel strength, TPO-PMMA [N/cm] | 14 | 11 | 16 | 10.5 | 13.5 |
| Adhesion on PP | + | + | + | + | + |
| Adhesion on PE | - | - | - | - | - |
| Adhesion on PVC | - | - | - | - | - |
| Adhesion on wood (pine) | + | + | + | + | + |
| Adhesion on PA | ○ | + | + | ○ | ○ |
| Adhesion on PC | - | + | + | - | - |
| Adhesion on ABS | ○ | + | + | ○ | ○ |
| Adhesion on GFRP | + | + | + | + | + |
| Adhesion on PUR | - | - | - | - | - |
| Adhesion on PMMA | + | + | + | + | + |
| Adhesion on aluminum | - | - | - | - | - |
| Adhesion on POM | - | - | - | - | - |

| | | | | | |
|---|---|---|---|---|---|
| - = poor adhesion, ○ = average adhesion, + = good adhesion | | | | | |

## Claims

1. An adhesive composition comprising:
a) At least one thermoplastic silane group containing poly-α-olefin **P** that is solid at a temperature of 25°C and
b) At least one reaction product **RP** of at least one monoisocyanate **MI** with at least one isocyanate reactive silane **SI** containing only one isocyanate reactive group selected from the group consisting of hydroxyl group, mercapto group and amino group.

2. The adhesive composition according to claim 1, wherein the at least one reaction product **RP** comprises 0.1 - 5.0 wt.-%, preferably 0.25 - 2.5 wt.-%, most preferably 0.5 - 1.5 wt.-%, of the total weight of the adhesive composition.

3. The adhesive composition according to claim 1 or 2, wherein the reaction product **RP** does not include any isocyanate groups.

4. The adhesive composition according to any of previous claims, wherein the isocyanate reactive silane **SI** is a compound of formula (I): 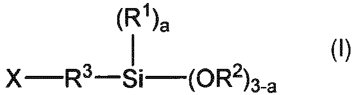 wherein
R¹ is a linear or branched C₁ to C₈ alkyl group,
R² is a linear or branched C₁ to C₅ alkyl group, or an acyl group,
R³ is a linear, branched or cyclical C₁ to C₂₀ alkyl group, or arylalkyl group,
a is 0, 1, or 2, and
X is an isocyanate reactive group selected from the group consisting of -OH, -SH, -NH₂, and -NHR⁴,
wherein
R⁴ is a C₁ to C₁₂ alkyl moiety or a C₆ to C₁₂ cycloalkyl or arylalkyl moiety or a substituent of the formula (II):

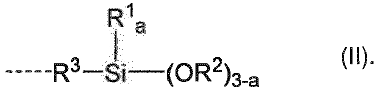

5. The adhesive composition according to any of previous claims, wherein the isocyanate reactive silane **SI** is selected from the group consisting of 3-mercapto propyltrimethoxysilane, 3-mercapto propyltriethoxysilane, mercaptomethyltrimethoxysilane, mercaptomethyltriethoxysilane, and 3-mercapto propyldimethoxymethylsilane.

6. The adhesive composition according to any of previous claims, wherein the monofunctional isocyanate **MI** is a toluenesulfonyl isocyanate.

7. The adhesive composition according to any of previous claims, wherein the at least one silane group containing poly-α-olefin is a silane grafted atactic poly-α-olefin.

8. The adhesive composition according to any of previous claims, wherein the at least one thermoplastic silane group containing poly-α-olefin **P** is present in the adhesive composition in an amount of 30 - 90 wt.-%, preferably 35 - 75 wt.-%, based on the total weight of the adhesive composition.

9. The adhesive composition according to any of previous claims further comprising 5 - 50 wt.-%, preferably 10 - 40 wt.-%, based on the total weight of the adhesive composition, of at least one thermoplastic poly-α-olefin without silane groups that is solid at a temperature of 25°C.

10. The adhesive composition according to any of previous claims further comprising at least one maleic acid anhydride functionalized polyolefin wax having a softening point, measured by Ring and Ball method according to DIN EN 1238, in the range of 80 - 180°C, preferably 100 - 160°C, wherein the at least one maleic anhydride functionalized polyolefin wax is present in the adhesive composition in an amount of 0.5 - 15.0 wt.-%, preferably 1.0 - 12.5 wt.-%, more preferably 1.5 - 10.0 wt.-%, most preferably 2.5 - 7.5 wt.-%, based on the total weight of the adhesive composition.

11. The adhesive composition according to any of previous claims further comprising at least one hydrocarbon resin having a softening point, measured by Ring and Ball method according to DIN EN 1238, in the range of 60 - 140°C, preferably 70 - 130°C, wherein the at least one hydrocarbon resin is present in the adhesive composition in an amount of 1.0 - 30.0 wt.-%, preferably 2.5 - 25.0 wt.-%, more preferably 2.5 - 20.0 wt.-%, most preferably 5.0 - 15.0 wt.-%, based on the total weight of the adhesive composition.

12. Use of the adhesive composition according to claims 1-11 as an assembly adhesive, laminating adhesive, or as an adhesive for the building of sandwich elements.

13. A method for producing a composite element, the method comprising steps of:
i) Applying a melted adhesive composition according to any of claims 1-11 to a first surface of a first substrate to form an adhesive film,
ii) Contacting the adhesive film with a first surface of a second substrate, and
iii) Chemically curing the adhesive film with water, in particular with atmospheric moisture.

14. The method according to claim 13, wherein the first substrate is composed of non-polar material and the second substrate is composed of polar material, or the first substrate is composed of polar material and the second substrate is composed of non-polar material.

15. A composite element comprising:
a) A first substrate,
b) A layer of adhesive composition according to any of claims 1-11, and
c) A second substrate, wherein the layer of adhesive composition is arranged between the first and second substrates such that the substrates are adhesively bonded to each other with the layer of adhesive composition.

## Patentansprüche

1. Klebstoffzusammensetzung, umfassend:
a) mindestens ein thermoplastisches Silangruppen enthaltendes Poly-α-olefin **P**, das bei einer Temperatur von 25 °C fest ist, und
b) mindestens ein Reaktionsprodukt **RP** von mindestens einem Monoisocyanat **MI** und mindestens einem isocyanatreaktiven Silan **SI** mit nur einer isocyanatreaktiven Gruppe, die aus der Gruppe bestehend aus einer Hydroxylgruppe, einer Mercaptogruppe und einer Aminogruppe ausgewählt ist.

2. Klebstoffzusammensetzung nach Anspruch 1, wobei das mindestens eine Reaktionsprodukt **RP** 0,1-5,0 Gew.-%, vorzugsweise 0,25-2,5 Gew.-%, ganz besonders bevorzugt 0,5-1,5 Gew.-%, des Gesamtgewichts der Klebstoffzusammensetzung ausmacht.

3. Klebstoffzusammensetzung nach Anspruch 1 oder 2, wobei das Reaktionsprodukt **RP** keine Isocyanatgruppen enthält.

4. Klebstoffzusammensetzung nach einem der vorhergehenden Ansprüche, wobei es sich bei dem isocyanatreaktiven Silan **SI** um eine Verbindung der Formel (I) handelt: 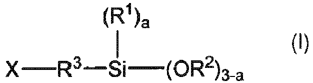 wobei
R¹ für eine lineare oder verzweigte C₁- bis C₈-Alkylgruppe steht,
R² für eine lineare oder verzweigte C₁- bis C₅-Alkylgruppe oder eine Acylgruppe steht,
R³ für eine lineare, verzweigte oder cyclische C₁-bis C₂₀-Alkylgruppe oder Arylalkylgruppe steht,
a für 0, 1 oder 2 steht und
X für eine isocyanatreaktive Gruppe steht, die aus der Gruppe bestehend aus -OH, -SH, -NH₂ und -NHR⁴ ausgewählt ist,
wobei
R⁴ für eine C₁- bis C₁₂-Alkylgruppierung oder eine C₆- bis C₁₂-Cycloalkyl- oder -Arylalkylgruppierung oder einen Substituenten der Formel (II) steht:

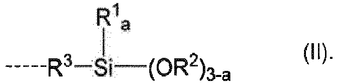

5. Klebstoffzusammensetzung nach einem der vorhergehenden Ansprüche, wobei das isocyanatreaktive Silan **SI** aus der Gruppe bestehend aus 3-Mercaptopropyltrimethoxysilan, 3-Mercaptopropyltriethoxysilan, Mercaptomethyltrimethoxysilan, Mercaptomethyltriethoxysilan und 3-Mercaptopropyldimethoxymethylsilan ausgewählt ist.

6. Klebstoffzusammensetzung nach einem der vorhergehenden Ansprüche, wobei es sich bei dem monofunktionellen Isocyanat **MI** um Toluolsulfonylisocyanat handelt.

7. Klebstoffzusammensetzung nach einem der vorhergehenden Ansprüche, wobei es sich bei dem mindestens einen Silangruppen enthaltenden Poly-α-olefin um ein silangepfropftes ataktisches Poly-α-olefin handelt.

8. Klebstoffzusammensetzung nach einem der vorhergehenden Ansprüche, wobei das mindestens eine Silangruppen enthaltende Poly-α-olefin **P** in der Klebstoffzusammensetzung in einer Menge von 30-90 Gew.-%, vorzugsweise 35-75 Gew.-%, bezogen auf das Gesamtgewicht der Klebstoffzusammensetzung, vorliegt.

9. Klebstoffzusammensetzung nach einem der vorhergehenden Ansprüche, ferner umfassend 5-50 Gew.-%, vorzugsweise 10-40 Gew.-%, bezogen auf das Gesamtgewicht der Klebstoffzusammensetzung, mindestens eines thermoplastischen Poly-α-olefins ohne Silangruppen, das bei einer Temperatur von 25 °C fest ist.

10. Klebstoffzusammensetzung nach einem der vorhergehenden Ansprüche, umfassend mindestens ein maleinsäureanhydridfunktionalisiertes Polyolefinwachs mit einem nach der Ring-und-Kugel-Methode gemäß DIN EN 1238 gemessenen Erweichungspunkt im Bereich von 80-180 °C, vorzugsweise 100-160 °C, wobei das mindestens eine maleinsäureanhydridfunktionalisierte Polyolefinwachs in der Klebstoffzusammensetzung in einer Menge von 0,5-15,0 Gew.-%, vorzugsweise 1,0-12,5 Gew.-%, weiter bevorzugt 1,5-10,0 Gew.-%, ganz besonders bevorzugt 2,5-7,5 Gew.-%, bezogen auf das Gesamtgewicht der Klebstoffzusammensetzung, vorliegt.

11. Klebstoffzusammensetzung nach einem der vorhergehenden Ansprüche, ferner umfassend mindestens ein Kohlenwasserstoffharz mit einem nach der Ring-und-Kugel-Methode gemäß DIN EN 1238 gemessenen Erweichungspunkt im Bereich von 60-140 °C, vorzugsweise 70-130 °C, wobei das mindestens eine Kohlenwasserstoffharz in der Klebstoffzusammensetzung in einer Menge von 1,0-30,0 Gew.-%, vorzugsweise 2,5-25,0 Gew.-%, weiter bevorzugt 2,5-20,0 Gew.-%, ganz besonders bevorzugt 5,0-15,0 Gew.-%, bezogen auf das Gesamtgewicht der Klebstoffzusammensetzung, vorliegt.

12. Verwendung der Klebstoffzusammensetzung nach einem der Ansprüche 1-11 als Montageklebstoff, Kaschierklebstoff oder als Klebstoff zum Aufbau von Sandwichelementen.

13. Verfahren zur Herstellung eines Verbundelements, wobei das Verfahren folgende Schritte umfasst:
i) Aufbringen einer geschmolzenen Klebstoffzusammensetzung nach einem der Ansprüche 1-11 auf eine erste Oberfläche eines ersten Substrats zur Bildung eines Klebstofffilms,
ii) Kontaktieren des Klebstofffilms mit einer ersten Oberfläche eines zweiten Substrats und
iii) Chemisches Härten des Klebstofffilms mit Wasser, insbesondere mit Luftfeuchtigkeit.

14. Verfahren nach Anspruch 13, wobei das erste Substrat aus unpolarem Material besteht und das zweite Material aus polarem Material besteht oder das erste Substrat aus polarem Material besteht und das zweite Material aus unpolarem Material besteht.

15. Verbundelement, umfassend
a) ein erstes Substrat,
b) eine Schicht aus einer Klebstoffzusammensetzung nach einem der Ansprüche 1-11 und
c) ein zweites Substrat, wobei die Schicht aus der Klebstoffzusammensetzung zwischen dem ersten Substrat und dem zweiten Substrat angeordnet sind, so dass die Substrate mit der Schicht aus der Klebstoffzusammensetzung miteinander verklebt sind.

## Revendications

1. Composition d'adhésif comprenant :
a) au moins une poly-α-oléfine **P** thermoplastique qui est solide à une température de 25 °C contenant un groupe silane et
b) au moins un produit de réaction **RP** d'au moins un monoisocyanate **MI** avec au moins un silane **SI,** réactif envers un isocyanate, contenant seulement un groupe réactif envers un isocyanate choisi dans le groupe constitué par un groupe hydroxyle, un groupe mercapto et un groupe amino.

2. Composition d'adhésif selon la revendication 1, l'au moins un produit de réaction **RP** représentant 0,1 à 5,0 % en poids, préférablement 0,25 à 2,5 % en poids, le plus préférablement 0,5 à 1,5 % en poids du poids total de la composition d'adhésif.

3. Composition d'adhésif selon la revendication 1 ou 2, le produit de réaction **RP** ne comportant aucun groupe isocyanate.

4. Composition d'adhésif selon l'une quelconque des revendications précédentes, le silane **SI** réactif envers un isocyanate étant un composé de formule (I) : 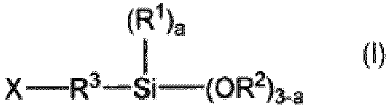
R¹ étant un groupe C₁ à C₈ alkyle linéaire ou ramifié,
R² étant un groupe C₁ à C₅ alkyle linéaire ou ramifié, ou un groupe acyle,
R³ étant un groupe C₁ à C₂₀ alkyle linéaire, ramifié ou cyclique, ou un groupe arylalkyle,
a étant 0, 1, ou 2, et
X étant un groupe réactif envers un isocyanate choisi dans le groupe constitué par -OH, -SH, -NH₂, et -NHR⁴,
R⁴ étant un fragment C₁ à C₁₂ alkyle ou un fragment C₆ à C₁₂ cycloalkyle ou arylalkyle ou un substituant de la formule (II) :

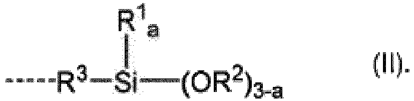

5. Composition d'adhésif selon l'une quelconque des revendications précédentes, le silane **SI** réactif envers un isocyanate étant choisi dans le groupe constitué par 3-mercapto propyltriméthoxysilane, 3-mercapto propyltriéthoxysilane, mercaptométhyltriméthoxysilane, mercaptométhyltriéthoxysilane, et 3-mercapto propyldiméthoxyméthylsilane.

6. Composition d'adhésif selon l'une quelconque des revendications précédentes, l'isocyanate monofonctionnel **MI** étant un isocyanate de toluènesulfonyle.

7. Composition d'adhésif selon l'une quelconque des revendications précédentes, l'au moins une poly-α-oléfine contenant un groupe silane étant une poly-α-oléfine atactique greffée avec un silane.

8. Composition d'adhésif selon l'une quelconque des revendications précédentes, l'au moins une poly-α-oléfine **P** thermoplastique contenant un groupe silane étant présente dans la composition d'adhésif en une quantité de 30 à 90 % en poids, préférablement 35 à 75 % en poids, sur la base du poids total de la composition d'adhésif.

9. Composition d'adhésif selon l'une quelconque des revendications précédentes comprenant en outre 5 à 50 % en poids, préférablement 10 à 40 % en poids, sur la base du poids total de la composition d'adhésif, d'au moins une poly-α-oléfine thermoplastique sans groupes silane qui est solide à une température de 25 °C.

10. Composition d'adhésif selon l'une quelconque des revendications précédentes comprenant en outre au moins une cire de polyoléfine fonctionnalisée par l'anhydride de l'acide maléique possédant un point de ramollissement, mesuré par un procédé à Anneau et Bille selon la norme DIN EN 1238, dans la plage de 80 à 180 °C, préférablement 100 à 160 °C, l'au moins une cire de polyoléfine fonctionnalisée par l'anhydride maléique étant présente dans la composition d'adhésif en une quantité de 0,5 à 15,0 % en poids, préférablement 1,0 à 12,5 % en poids, plus préférablement 1,5 à 10,0 % en poids, le plus préférablement 2,5 à 7,5 % en poids, sur la base du poids total de la composition d'adhésif.

11. Composition d'adhésif selon l'une quelconque des revendications précédentes comprenant en outre au moins une résine d'hydrocarbure possédant un point de ramollissement, mesuré par un procédé à Anneau et Bille selon la norme DIN EN 1238, dans la plage de 60 à 140 °C, préférablement de 70 à 130 °C, l'au moins une résine d'hydrocarbure étant présente dans la composition d'adhésif en une quantité de 1,0 à 30,0 % en poids, préférablement 2,5 à 25,0 % en poids, plus préférablement 2,5 à 20,0 % en poids, le plus préférablement 5,0 à 15,0 % en poids, sur la base du poids total de la composition d'adhésif.

12. Utilisation de la composition d'adhésif selon les revendications 1 à 11 en tant qu'adhésif d'assemblage, adhésif de stratification, ou en tant qu'adhésif pour la construction d'éléments en sandwich.

13. Procédé pour la production d'un élément composite, le procédé comprenant les étapes de :
i) application d'une composition d'adhésif fondue selon l'une quelconque des revendications 1 à 11 à une première surface d'un premier substrat pour former un film adhésif,
ii) mise en contact du film adhésif avec une première surface d'un deuxième substrat, et
iii) durcissement de manière chimique du film adhésif avec de l'eau, en particulier avec de l'humidité atmosphérique.

14. Procédé selon la revendication 13, le premier substrat étant composé de matériau non polaire et le deuxième substrat étant composé de matériau polaire, ou le premier substrat étant composé de matériau polaire et le deuxième substrat étant composé de matériau non polaire.

15. Élément composite comprenant :
a) un premier substrat,
b) une couche de composition d'adhésif selon l'une quelconque des revendications 1 à 11, et
c) un deuxième substrat, la couche de composition d'adhésif étant agencée entre les premier et deuxième substrats de sorte que les substrats soient liés de manière adhésive l'un à l'autre avec la couche de composition d'adhésif.
